# EUROPEAN PATENT SPECIFICATION

(11) **EP 1 056 688 B1**
(45) Date of publication and mention of the grant of the patent: **24.03.2004**
(21) Application number: 99905395.2
(22) Date of filing: 25.01.1999
(51) Int. Cl.: C02F 3/00, C02F 9/00, C02F 1/00

(54) **METHOD FOR CLEANING OF LEACHATE**
VERFAHREN ZUR REINIGUNG VON SICKERWASSER
PROCEDE POUR PURIFIER LE LIXIVIAT

(30) Priority: 23.01.1998 SE 9800173
(43) Date of publication of application: 06.12.2000
(73) Proprietor: Globe Water AB, 100 55 Stockholm (SE)
(72) Inventor: SCHWALBE, Pontus, S-100 55 Stockholm (SE)
(74) Representative: Berglund, Stefan
(86) International application number: PCT/SE1999/000098
(87) International publication number: WO 1999/037587

(56) References cited:
- DE-C1- 4 013 779
- US-A- 4 995 969
- US-A- 5 174 897
- CHEMICAL ABSTRACTS, Volume 124, No. 12, 18 March 1996, (Columbus, Ohio, USA), Abstract No. 154595, MOORE J.A. et al., "Treating Dairy Flush Water in a Constructed Wetland"; & INT. SYMP. AGRIC. FOOD PROCESS, WASTES, PROC., 1995, 74-86.

## Description

The present invention relates to a method for cleaning leachate according to the preamble of claim 1, see US-A- 5,174,897.

The generation of leachate is an.unavoidable consequence of sewage being tipped on a sewage dump. It is the result of, that soluble materials are disappearing in that water in an uneven and intermittent way drips through the sewage masses. As the water has a long retention time in a refuse dump in a mostly anaerobic environment it is polluted with organic substances and heavy metals and might thus be extremely toxic and is not allowed to flow into the environmental water. Nowadays the composition of leachate is controlled to a certain degree in sorting the sewage and by means of a monitoring. Many refuse dumps, however, are old and any classification has not been performed previously. Most of the biological, physical and chemical processes being used for treating industrial sewage water have either been tested in special plants or the leachate had been treated together with the community sewage water. These methods are not desirable, as the investments and the operation and the maintenance are expensive and the adding of leachate to the community sewage water is disturbing the biological process the treatment is based on.

Designed wetland systems have been regarded as suitable for treating leachate from refuse dump as a method which is cheap and requires low power consumption. However the need of big land areas is a drawback of wetland systems. Other problems comprise the high concentrations of biochemical oxygen (BoD) with up to 20.000 mg/l, chemical oxygen requirements (COD) with 30.0000 mg/l, ammonia (NH4⁺) with 1.200 mg/l, chlorine (Cl⁻) with 3.000 mg/l iron (Fe) with 700 mg/l and manganese (Mn) with 600 mg/l. One years production of leachate from big refuse dumps in Sweden amounts. to 150.000 m³, this volume after cleaning to be regarded as a resource for various purposes.

From the Swedish patent application 9701379-1 a method is already known for cleaning leachate basing on natural processes and being essentially as effective as known conventional processes, but is more economic. In said process, during which the water passes through several treatment stages, including i.a. precipitation of impurities and the separation of sludge, the water is finally taken to a sorption stage and a retention stage in form of a compressed wetland system, possibly with the shape of a plant based wetland. From the wetland system the water is possibly led to a natural recipient, like a lake or a moss.

Alternatively to the conventional treatments a treatment of sewage water is required to solve the problems mentioned above.

The purpose of the invention is to develop and to improve the already known method.

Another purpose of the invention is to further improve the sorption and retention stages.

A further purpose is to even improve the sludge treatment stage in case a sludge treatment is included in the previous treatment.

These and other purposes are obtained in that the method is provided with the characteristics specified in the independent claim 1.

The invention will be described here below more in detail in connection with an embodiment shown in the drawings.
**Figure 1** shows a plane view of a wetland installation according to the invention,
**Figure 2** shows a section along the line II-II in figure 1 of a dam included in the installation,
**Figure 3** shows a cross section of a pump station in the installation to pump the leachate to the dams in figure 1,
**Figure 4** shows a cross section of a distribution line for leachate, and
**Figure 5** shows a cross section along the line V-V in figure 3 through the line traction in the ground.

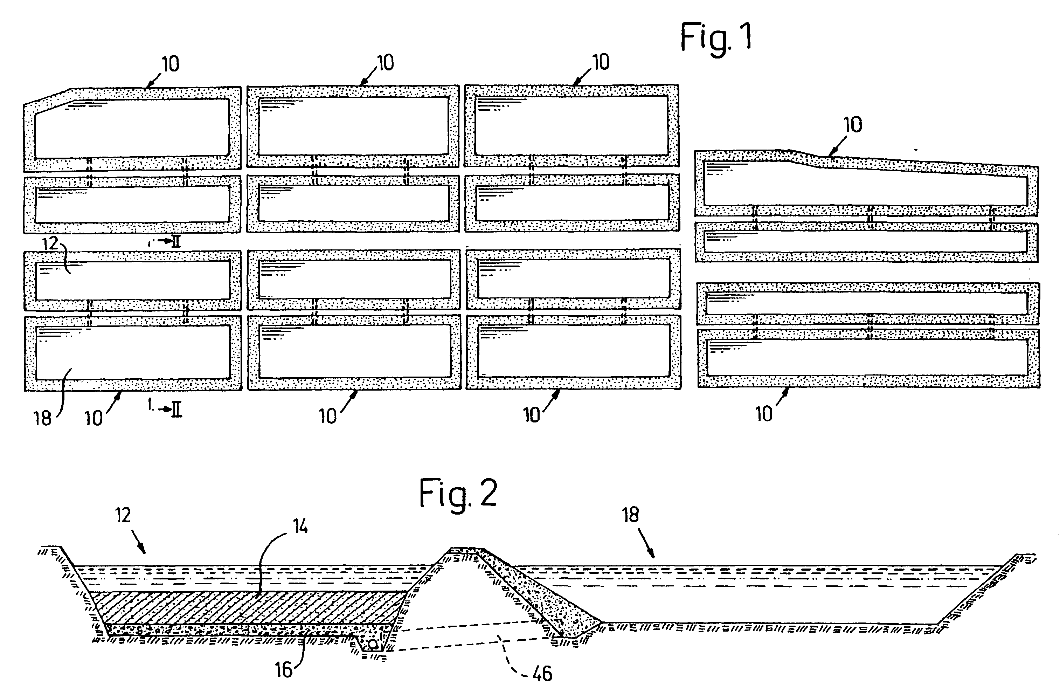

The plant shown in a plane view in figure 1 comprises in the illustrated embodiment eight dams 10 leading to a wetland system to be described here below.

Leachate coming from a previous treatment including separation and precipitation of impurities, separation of sludge and further cleaning stages is lead to the wetland system preceding the sorption and retention stage. These treatments might be performed in several different ways, for this description, however, a chemical treatment is mentioned as an example.

The chemical precipitation is performed in a plant possibly comprising a deaerating device, a dosing device for chemicals controlling the pH and a conductivity control, an edge separator with a precipitation chamber, a continuous filter with reactive media and a sludge bin. The separated sludge can be rotten by means of plaster to bind heavy metals such as sulfides, or alternatively be treated with sorbents.

The retention stage following said treatment for the reduction of nitrogen and metal residues comprises, as previously mentioned, a wetland system with a number of dams 10. Each dam 10 is designed with two interconnected portions by means of a connecting pipe 46. One portion 12 consists of a bed 14 with a sorbent and/or an organic plant material, the bed 14 lying on a frame 16 filled with sand, shingle or similar filling material, whereas the other portion 18 consists of an open basin with a suitable water level, e.g. 1 meter. The water level might be adjusted to a desired level by means of a compensation reservoir to be described later on.

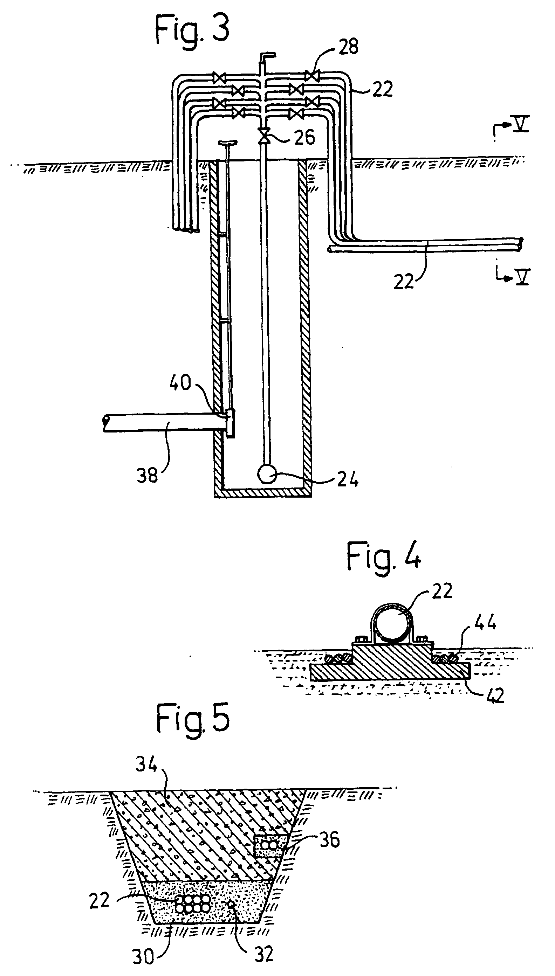

The leachate distribution from the preceding chemical treatment, described as an example, to the dam portions 12 is performed by pumping in a pump station 20, shown schematically in figure 3, with a pump 24 via a main valve 26 in this embodiment feeding eight supply pipes 22 to the dams 10 portions 12. Each pipe 22 is provided with a valve 28 to control the flow to the corresponding dam 10. The pipes 22 are installed in the ground with a surrounding filling 30 of sand or shingle together with one or several pipes 32 for emptying the dams 10. A final filling 34 is up to the ground level placed on top of the filling 30 and possibly contains even cable pipes 36 or similar. Between the preceding leachate treatment and the pumping station 20 a here not shown compensating reservoir might be arranged, the water supply to the pumping station being controlled by means of a butterfly valve 40. Each supply and distribution pipe 22 is conducted one to each dam portion 12. where it is brought to float on top of the plant bed 14 level in that the pipe is placed on a raft 42 loaded with suitable weights 44, so that the pipe 22 lies on a desired level with its lower envelope surface on the same level as the plant or sorbent bed 14 The pipes 22 are provided with several evenly spaced, here not shown outlet holes in the area of the pipe 22 situated on the plant bed 14, so that leachate is evenly distributed over the plant bed 14. Thereafter the leachate is pumped to the plant bed surface or the sorbent material infiltrates the leachate and reaches the transport pipe 46 placed inside the filling material 16, through which pipe the water reaches the open basin or dam portion 18, from which it finally can be discharged directly into a natural recipient.

The wetlands according to the preferred embodiment shown in the figures are adapted to be cyclically loaded so that an anaerobic period and an aerobic period of about one weeks duration are obtained. During the anaerobic period the sorbent or plant bed 14 will be covered by leachate. This implies that the necessary number of dams 10 will be eight as shown in figure 1. Other types of cycles might of course be used if so required without leaving the scope of the invention.

The method according to the present invention is a combined system combining natural systems with chemical processes. The chemical pretreatment is required for the removal of heavy metals, so that impurities are avoided in the compact wetland system. The substrate might then be exchanged after a couple of years and might be, if not toxic, mixed with the compost produced in the refuse tip.

An example of the resulting treatment according to the invention is shown here below:

**Table 1.**

| Leachate chemical composition and reduction after treatment by the method according to the invention: | | | |
|---|---|---|---|
| Parameter | Units | Mean value | Reduction % |
| pH | | 7.4 | |
| Alkalinity | mg/L | 870 | 75 |
| Conductivity | mS/m | 376 | 40 |
| BOD₇ | mg/L | 5.1 | 48 |
| COD (Cr) | mg/L | 200 | 60 |
| Total-P | mg/L | 0.06 | 67 |
| Total-N | mg/L | 71 | 70 |
| N-NH₄ | mg/L | 65 | 82 |
| CI⁻ | mg/L | 680 | 37 |
| Fe | mg/L | 1.9 | 94 |
| Pb | µg/L | 0.5 | 20 |
| Cd | µg/L | 0.08 | 50 |
| Cr | µg/L | 5.7 | 12 |
| Ni | µg/L | 3.0 | 13 |
| Cu | µg/L | 9.0 | 45 |
| Mn | µg/L | 2.0 | 75 |
| Zn | µg/L | 130 | 80 |

The results of water analyses are presented in Table 1.
Leachate seeping out from the landfill has a temperature of approximately 25°C all year round. This is important since removal of certain substances, such as ammonia, in the wetland is a temperature dependent phenomenon. For that reason, insulation of at least some cells in the wetland system, is proposed, which could help to avoid total shut-down of the wetland during the cold season.

Evidently the method and the device according to the invention results in a local taking care of by means of natural processes in the ground and the culture medium. Due to the all-round cleaning ability the cleaned leachate may be discharged directly into a natural receiver, such as a lake or a moss.

## Claims

1. A method for cleaning leachate comprising that the leachate after a collecting stage is led to several treatment stages, whereupon the leachate is finally taken to a wetland system comprising a sorption and a retention stage, wherein the wetland system comprises at least one dam comprising a first portion and a second portion, which are connected to each other, wherein the first portion consists of a plant bed and/or a sorption bed, through which the water passes, and the second portion, to which the water is taken from the first portion after having passed through the plant or sorption bed, consists of an open basin with a controlled water level, **characterized in that** the wetland system is cyclically charged forming an anaerobic period and an aerobic period.

2. A method according to claim 1, **characterized in that** the leachate is led to several dams cyclically charged during a desired time period, e.g. a week.

3. A method according to anyone of the claims 1 and 2, **characterized in that** the leachate distribution to the first dam portion is effected by a pumping to the plant or sorption bed surface.

4. A method according to anyone of the claims 1 to 3, **characterized in that** the treatment stages comprise a chemical treatment with a sludge separation to be rotten in place by means of plaster.

## Patentansprüche

1. Verfahren zur Reinigung von Sickerwasser, das Folgendes umfasst: Zuführen des Sickerwassers nach einer Sammelphase zu mehreren Behandlungsphasen, wonach das Sickerwasser schließlich einem Feuchtgebiets-System zugeführt wird, das eine Sorptions- und eine Rückhaltephase umfasst, wobei das Feuchtgebiets-System wenigstens einen Damm aufweist, der einen ersten Abschnitt und einen zweiten Abschnitt aufweist, die miteinander verbunden sind, wobei der erste Abschnitt aus einem Pflanzenbett und/oder einem Sorptionsbett besteht, durch das das Wasser läuft, und der zweite Abschnitt, dem das Wasser von dem ersten Abschnitt zugeführt wird, nachdem es das Pflanzen- oder Sorptionsbett durchlaufen hat, aus einem offenen Becken mit geregeltem Wasserspiegel besteht, **dadurch gekennzeichnet, dass** das Feuchtgebiets-System zyklisch beschickt wird; wobei eine anaerobe Periode und eine aerobe Periode gebildet werden.

2. Verfahren nach Anspruch 1, **dadurch gekennzeichnet, dass** das Sickerwasser zu mehreren Dämmen geleitet wird, die während eines gewünschten Zeitabschnitts, z.B. einer Woche, zyklisch beschickt werden.

3. Verfahren nach einem der Ansprüche 1 und 2, **dadurch gekennzeichnet, dass** die Verteilung des Sickerwassers zu dem ersten Dammabschnitt durch Pumpen zu der Pflanzen- oder Sorptionsbettoberfläche bewirkt wird.

4. Verfahren nach einem der Ansprüche 1 bis 3, **dadurch gekennzeichnet, dass** die Behandlungsphasen eine chemische Behandlung umfassen, wobei eine Schlammabscheidung an Ort und Stelle durch Gips zum Verrotten gebracht wird.

## Revendications

1. Procédé pour purifier le lixiviat comprenant que le lixiviat après une étape de collecte est conduit vers plusieurs étapes de traitement, après quoi le lixiviat est finalement transporté vers un système de type marais comprenant une étape de sorption et de rétention dans lequel le système de type marais comprend au moins une digue comprenant une première partie et une seconde partie, qui sont connectées l'une à l'autre, dans lequel la première partie se compose d'un lit végétal et/ou un lit de sorption, à travers lequel l'eau passe, et la seconde partie, vers laquelle l'eau est envoyée de la première partie après avoir traversé le lit végétal ou de sorption, se compose d'un bassin ouvert avec un niveau d'eau contrôlé, **caractérisé en ce que** le système de type marais est chargé de manière cyclique créant une période anaérobie et une période aérobie.

2. Procédé selon la revendication 1, **caractérisé en ce que** le lixiviat est conduit aux différentes digues en étant chargé de manière cyclique pendant une durée souhaitée, par exemple une semaine.

3. Procédé selon l'une quelconque des revendications 1 et 2, **caractérisé en ce que** l'apport du lixiviat au niveau de la première partie de digue est effectué par un pompage de la surface du lit végétal ou de sorption.

4. Procédé selon l'une quelconque des revendication 1 à 3, **caractérisé en ce que** les étapes de traitement comprennent un traitement chimique avec une séparation des impuretés à purifier sur place au moyen d'un plâtre.
